# EUROPEAN PATENT APPLICATION

(11) **EP 3 468 301 A1**
(43) Date of publication of application: **10.04.2019**
(21) Application number: 17810499.8
(22) Date of filing: 31.05.2017
(51) Int. Cl.: H05B 6/12, H05B 6/36, H05B 6/44, H05B 6/06

(54) **INDUCTION HEATING DEVICE**

(30) Priority: 07.06.2016 KR 20160070535
(71) Applicant: LG Electronics Inc., Yeongdeungpo-gu Seoul 07336 (KR)
(72) Inventor: OH, Dooyong, Seoul 08592 (KR); PARK, Byeong Wook, Seoul 08592 (KR)
(74) Representative: Vossius & Partner Patentanwälte Rechtsanwälte mbB
(86) International application number: PCT/KR2017/005709
(87) International publication number: WO 2017/213376

(57) **Abstract**

The present invention relates to an induction heating device and, more specifically, to an induction heating device which heats an object to be heated by using an induction heating method. The induction heating device for heating an object to be heated according to an embodiment of the present invention comprises: a first coil wound in the radius direction in a first number of times of rotation; a second coil disposed outside the first coil by being spaced therefrom by a predetermined distance, and wound in the radius direction in a second number of times of rotation; and a power unit for supplying a high-frequency alternating current to the first coil and the second coil by converting external alternating current power, wherein the ratio between the first number of times of rotation and the second number of times of rotation is determined such that the induction heating device has a maximum output of 6500 W to 7500 W.

## Description

### [Technical Field]

The present invention relates to an induction heating device, and more particularly, to an induction heating device configured to heat an object to be heated by using an induction heating method.

### [Background Art]

Various types of cooking utensils are being used to heat food in homes and restaurants. Conventionally, gas ranges using gas as a fuel have come into wide use. However, recently, devices for heating an object to be heated, for example, a cooking vessel such as a cooking pot, using electricity without using gas have come into use.

A method of heating an object to be heated using electricity is divided into a resistance heating method and an induction heating method. An electric resistance method is a method of heating an object to be heated by transferring heat generated when a current is passed through a metal-resistant wire or a non-metallic heating element such as silicon carbide to the object to be heated through radiation or conduction. The induction heating method is a method of generating an eddy current in an object to be heated that is made of a metal component by using a magnetic field that occurs around a coil when a predetermined magnitude of high-frequency power is applied to the coil so that the object to be heated itself is heated.

A principle of the induction heating method will be described in more detail as follows. First, as power is applied to the induction heating device, e.g., an induction range, a predetermined magnitude of high-frequency voltage is applied to the coil. Accordingly, an induction magnetic field occurs around the coil. When a magnetic force line of the induction magnetic field passes through a bottom of the object to be heated including a metal component that is placed on an upper portion of the induction heating device, an eddy current occurs in the bottom of the object to be heated. When the eddy current flows through the bottom of the object to be heated, the object to be heated itself is heated.

When the induction heating device is used, an upper plate portion of the induction heating device is not heated but only the object to be heated is heated. Therefore, when the object to be heated is lifted from the upper plate portion of the induction heating device, the induction magnetic field occurring around the coil disappears and heating of the object to be heated is immediately stopped. Also, the upper plate portion is maintained at a relatively low temperature because the coil is not heated, and thus the induction heating device has an advantage that it is safe. In addition, the induction heating device has an advantage that it has higher energy efficiency in comparison to a gas range or a device using the resistance heating method because it heats the object to be heated itself by means of induction heating.

Another advantage of the induction heating device is that it is possible to heat the object to be heated in a shorter time than devices using other methods. Also, the higher the output of the induction heating device, the faster the object to be heated can be heated. However, a maximum output of the induction heating device according to the related art remains in a range of 3000 W to 5500 W. Therefore, in order to meet demands of the user who wants to heat the object to be heated more quickly in a shorter time, it is necessary to develop an induction heating device having a maximum output that exceeds the maximum output range of the conventional induction heating device.

### [Disclosure]

### [Technical Problem]

It is an object of the present invention to provide an induction heating device having a maximum output that exceeds a maximum output range of a conventional induction heating device.

It is another object of the present invention to provide an induction heating device capable of heating an object to be heated more quickly by having a higher maximum output than the conventional induction heating device.

The objects of the present invention are not limited to the above-mentioned objects, and the other objects and the advantages of the present invention which are not mentioned can be understood by the following description, and more clearly understood by the embodiments of the present invention. It will be also readily seen that the objects and the advantages of the present invention may be realized by means indicated in the patent claims and a combination thereof.

### [Technical Solution]

As described above, the present invention aims to provide an induction heating device having a maximum output of 6000 W or more that exceeds a low output of 3000W to 5500W, which is a limit of a conventional induction heating device. The induction heating device according to the present invention may include a first coil wound in a radial direction by a first number of rotations and a second coil spaced apart from the first coil by a predetermined distance to be disposed outside the first coil, and wound in a radial direction by a second number of rotations. In order to have the above-described maximum output of 6000 W or more, a ratio between the first number of rotations and the second number of rotations needs to be appropriately determined.

According to one embodiment of the present invention, there is provided an induction heating device for heating an object to be heated. The induction heating device may include a first coil wound in a radial direction by a first number of rotations, a second coil spaced apart from the first coil by a predetermine distance to be disposed outside the first coil, and wound in a radial direction by a second number of rotations, and a power supply unit configured to convert external alternating current (AC) power to supply a high-frequency AC to the first coil and the second coil. A ratio between the first number of rotations and the second number of rotations may be determined such that the induction heating device has a maximum output of 6500 W to 7500 W.

Also, according to one embodiment of the present invention, there is provided an induction heating device for heating an object to be heated. The induction heating device may include an induction assembly including a first coil wound in a radial direction by a first number of rotations and a second coil spaced apart from the first coil by a predetermined distance to be disposed outside the first coil, and wound in a radial direction by a second number of rotations, an interface unit configured to adjust an output of the induction assembly, and a power supply unit configured to supply power to the induction assembly and the interface unit. A ratio between the first number of rotations and the second number of rotations may be determined such that induction heating device has a maximum output of 6500 W to 7500 W.

When the ratio between the number of rotations of the first coil and the number of rotations of second coil of the induction heating device according to the present invention, that is, the ratio between the first number of rotations and the second number of rotations, is any one of 18:11, 17:11, 17:10 and 16:10, the induction heating device may have a maximum output of 6500 W to 7500 W.

In particular, when the ratio between the first number of rotations and the second number of rotations is any one of 18:11, 17:11 and 16:10, the induction heating device may have a maximum output of 7000 W to 7500 W. The maximum output of the induction heating device according to the present invention may greatly exceed a maximum output range of 3000 W to 5500 W of a conventional induction heating device. As a result, the induction heating device having a larger output according to the present invention may heat the object to be heated more quickly than the conventional induction heating device.

### [Advantageous Effects]

The induction heating device according to the present invention as described above is advantageous that it has a maximum output that exceeds a maximum output range of a conventional induction heating device.

Also, the induction heating device according to the present invention is advantageous in that it is possible to heat an object to be heated more quickly by having a higher maximum output than the conventional induction heating device.

### [Description of Drawings]

FIG. 1 is a perspective view of an induction heating device according to one embodiment of the present invention.
FIG. 2 is a perspective view of an induction assembly included in an induction heating device according to one embodiment of the present invention.
FIG. 3 is a rear view of a coil base included in an induction assembly according to one embodiment of the present invention.
FIG. 4 is a view illustrating the number of rotations of a coil according to the present invention.
FIG. 5 is a graph illustrating a ratio between a first number of rotations and a second number of rotations that meets a restriction condition according to one embodiment of the present invention.
FIG. 6 is a graph illustrating a ratio between a first number of rotations and a second number of rotations that meets a restriction condition according to another embodiment of the present invention.

### [Best Mode]

The aforementioned objects, features and advantages will be described in detail with reference to the accompanying drawings, such that those skilled in the art can easily carry out a technical idea of the present invention. In the description of the embodiments, the detailed description of well-known related configurations or functions will be omitted when it is deemed that such description will cause ambiguous interpretation of the present invention. Hereinafter, preferred embodiments of the present invention will be described in detail with reference to the accompanying drawings. In the drawings, same reference numerals designate same or like elements.

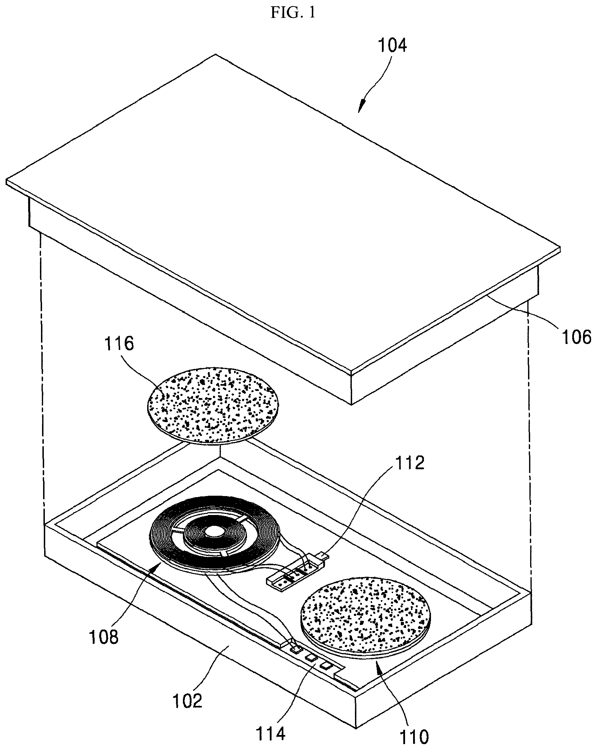

FIG. 1 is a perspective view of an induction heating device according to one embodiment of the present invention.

Referring to FIG. 1, the induction heating device according to one embodiment of the present invention may include a case 102 constituting a main body and a cover plate 104 coupled to the case 102 to seal the case 102.

The cover plate 51 may be coupled to an upper surface of the case 102 to seal a space formed inside the case 102 from an outside. The cover plate 51 may include an upper plate portion 104 on which an object to be heated such as a cooking vessel can be placed. In one embodiment of the present invention, the upper plate portion 104 may be made of a tempered glass material such as ceramic glass.

Referring again to FIG. 1, induction assemblies 108 and 110 configured to heat an object to be heated may be disposed in the space formed inside the case 102. Also, an interface 114 configured to adjust outputs of the induction assemblies 108 and 110 and a power supply unit 112 configured to supply power to the induction assemblies 108 and 110 and the interface unit 114 may be disposed in the case 102. For reference, the embodiment of FIG. 1 illustrates two induction assemblies 108 and 110 disposed in the case 102, however, in another embodiment of the present invention, two or more induction assemblies may be disposed in the case 102.

The induction assemblies 108 and 110 each may include a coil configured to form an induction magnetic field by using a high-frequency alternating current (AC) supplied by the power supply unit 112, and a heat insulation sheet 116 configured to protect the coil from heat generated by the object to be heated. Also, although not illustrated in FIG. 1, the induction assemblies 108 and 110 each may further include a temperature sensor configured to measure temperature of the object to be heated.

As illustrated in FIG. 1, the coils included in the induction assemblies 108 and 110 each may be electrically connected to the power supply unit 112 through a conducting wire to directly receive power from the power supply unit 112. Further, the induction assemblies 108 and 110 each may be also electrically connected to the interface unit 114 through the conducting wire. Accordingly, a user may adjust the outputs of the induction assemblies 108 and 110 as desired through operation of the interface unit 114.

Hereinafter, a configuration of the induction assemblies 108 and 110 illustrated in FIG. 1 will be described in more detail.

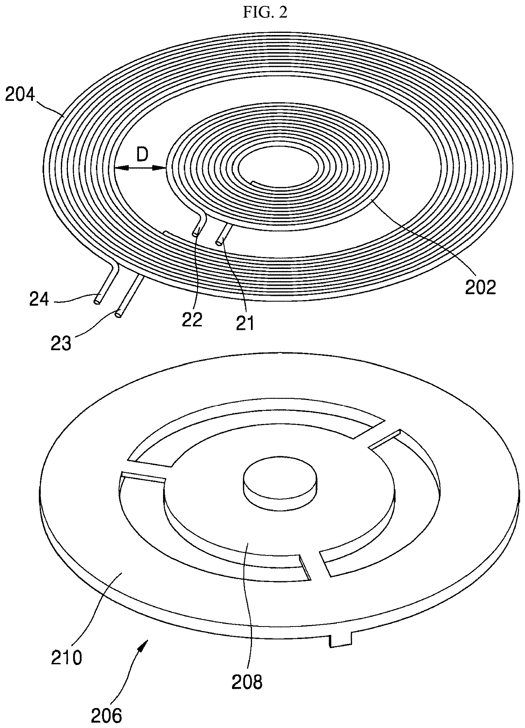

FIG. 2 is a perspective view of an induction assembly included in an induction heating device according to one embodiment of the present invention.

Referring to FIG. 2, the induction assembly according to one embodiment of the present invention may include a first coil 202, a second coil 204, and a coil base 206 configured to fix the first coil 202 and the second coil 204.

The induction assembly of the induction heating device according to one embodiment of the present invention may include the two coils 202 and 204 spaced apart from each other by a predetermined distance D as illustrated in FIG. 2. The reason why the induction assembly is composed of two different coils is that it is easy to control an output of the induction heating device according to a use. For example, when the user desires a relatively low output, power may be supplied only to any one of the first coil 202 and the second coil 204 included in the induction assembly. However, when the user desires a relatively high output or maximum output, power may be supplied to both the first coil 202 and the second coil 204 included in the induction assembly. For example, when the user operates to heat the object to be heated at the maximum output through the interface unit 114, power may be supplied to both the first coil 202 and the second coil 204, and as a result, the induction heating device may operate at the maximum output.

Referring again to FIG. 2, the induction assembly according to one embodiment of the present invention may include a first coil 202 wound in a radial direction by a first number of rotations, and a second coil 204 wound in a radial direction by a second number of rotations. As illustrated in FIG. 2, the second coil 204 may be spaced apart from the first coil by a predetermined distance D, and may be disposed outside the first coil 202. Also, opposite ends 21 and 22 of the first coil 202 and opposite ends 23 and 24 of the second coil 204 each may be electrically connected to the power supply unit 112. The opposite ends 21 and 22 of the first coil 202 and the opposite ends 23 and 24 of the second coil 204 each may be directly connected to the power supply unit 112 or may be connected to the power supply unit 112 through the conducting wire.

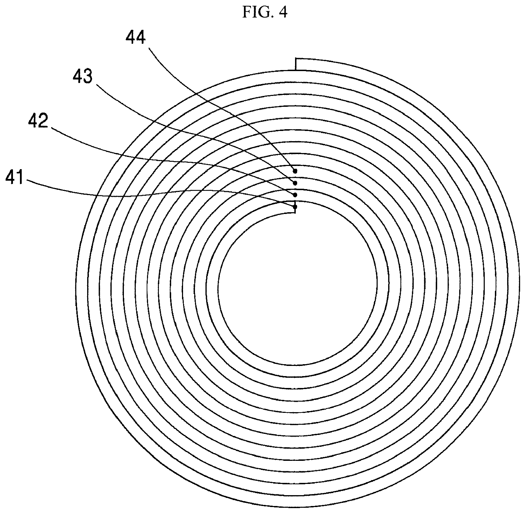

For reference, in the present invention, "the number of rotations" of the coil means the number of times the coil is wound in a circumferential direction. FIG. 4 is a view illustrating the number of rotations of a coil according to the present invention. Referring to FIG. 4, the number of rotations of the coil may be calculated on the basis of points 41, 42, 43, and 44 lying on the same straight line in a radial direction. For example, when the coil is wound from the point 41 to the point 42 of the coil illustrated in FIG. 4, the number of rotations of the coil may be 1. Similarly, when the coil is wound from the point 41 to the point 42, the number of rotations of the coil may be 2, and when the coil is wound from the point 41 to the point 43, the number of rotations of the coil may be 3.

Also, in one embodiment of the present invention, the ratio between the first number of rotations of the first coil 202 and the second number of rotations of the second coil 204 may be set differently according to the maximum output of the induction assembly or the induction heating device. According to the present invention, the induction heating device may preferably have a maximum output of at least 6000 W. In one embodiment of the present invention, the induction heating device may have a maximum output of 6500 W to 7500 W. At this time, the ratio between the first number of rotations and the second number of rotations may be determined to be any one of 18:11, 17:11, 17:10 and 16: 10.

Further, in another embodiment of the present invention, the induction heating device may have a maximum output of 7000 W to 7500 W. At this time, the ratio between the first number of rotations and the second number of rotations may be determined to be any one of 18:11, 17:11 and 16:10.

Further, in one embodiment of the present invention, the high-frequency AC supplied to the first coil 202 and the second coil 204 may preferably have an output frequency of 25 kHz to 35 kHz.

Referring again to FIG. 2, the induction assembly according to one embodiment of the present invention may include a coil base 206 configured to fix the first coil 202 and the second coil 204. The coil base 206 may include a first base 208 on which the first coil 202 is disposed and a second base 210 on which the second coil 204 is disposed. The first base 208 and the second base 210 may be spaced apart from each other by a predetermined distance D or more.

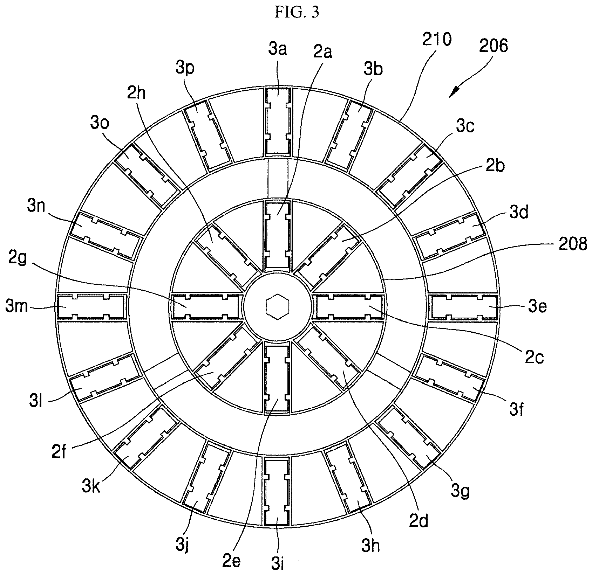

FIG. 3 is a rear view of a coil base included in an induction assembly according to one embodiment of the present invention.

Referring to FIG. 3, a lower portion of the coil base 206 included in the induction assembly according to one embodiment of the present invention may be provided with first shielding sheet accommodating portions 2a to 2h configured to accommodate one or more first shielding sheets, and second shielding sheet accommodating portions 3a to 3p configured to accommodate one or more second shielding sheets.

More specifically, a lower portion of the first base 208 included in the coil base 206 may be provided with the first shielding sheet accommodating portions 2a to 2h configured to accommodate one or more first shielding sheets. The first shielding sheets may be inserted into the first shielding sheet accommodating portions 2a to 2h, respectively. Accordingly, an upper portion of the first base 208 may be provided with the first coil 202, and the lower portion of the first base 208 may be provided with one or more first shielding sheets. FIG. 3 illustrates a total of eight first shielding sheet accommodating portions 2a to 2h, but the number of the first shielding sheets disposed on the lower portion of the first base 208 may vary according to an embodiment.

Similarly, a lower portion of the second base 210 included in the coil base 206 may be provided with the second shielding sheet accommodating portions 2a to 2h configured to accommodate one or more second shielding sheets. The second shielding sheets may be inserted into the second shielding sheet accommodating portions 2a to 2h, respectively. Accordingly, an upper portion of the second base 208 may be provided with the first coil 202, and the lower portion of the second base 208 may be provided with one or more second shielding sheets. FIG. 3 illustrates a total of sixteen second shielding sheet accommodating portions 3a to 3p, but the number of the second shielding sheets disposed on the lower portion of the second base 208 may vary according to an embodiment.

In the present invention, the first shielding sheet and the second shielding sheet disposed on the lower portion of the coil may respectively prevent an induction magnetic field formed by the first coil 202 and the second coil from being formed on the lower portions of the first coil 202 and the second coil 204, thereby enhancing output efficiency of the induction assembly. In one embodiment of the present invention, the first shielding sheet and the second shielding sheet each may be made of a material capable of shielding an electromagnetic wave, such as a ferrite sheet. Hereinafter, the maximum output of the induction heating device according to one embodiment of the present invention and the ratio between the number of rotations of the first coil and the number of rotations of the second coil resulting therefrom will be described in more detail.

As described above, a maximum output of an induction heating device according to the related art remains in a range of 3000 W to 5500 W. However, the maximum output of the induction heating device is insufficient to heat the object to be heated within a short time. Therefore, the induction heating device according to the present invention is characterized by having a maximum output of 6000 W or more so as to heat the object to be heated more quickly than the induction heating device according to the related art.

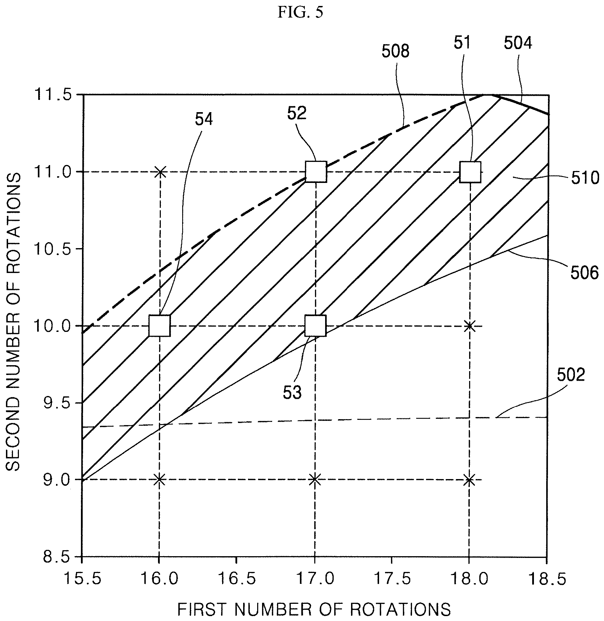

FIG. 5 is a graph illustrating a ratio between a first number of rotations and a second number of rotations that meets a restriction condition according to one embodiment of the present invention.

In FIG. 5, a horizontal axis represents a first number of rotations, i.e., the number of times the first coil is wound, and a vertical axis represents a second number of rotations, i.e., the number of times the second coil is wound. Further, in FIG. 5, a line 502 represents a region where the frequency of the high-frequency AC applied to the first coil and the second coil is maintained at 25 kHz, and a line 504 represents a region where the frequency of the high-frequency AC applied to the first coil and the second coil is maintained at 35 kHz. Further, in FIG. 5, a line 506 represents a region where the maximum output of the induction heating device according to the present invention is 6500 W, and a line 508 represents a region where the maximum output of the induction heating device according to the present invention is 7500 W.

[Table 1] shows maximum outputs of the induction heating device that are measured as a result of experiments in which the first number of rotations and the second number of rotations are set to be different from each other.

**[Table1]**

| First number of rotations | Second number of rotations | Maximum output [W] |
|---|---|---|
| 16 | 9 | 5588 |
| 16 | 11 | 7590 |
| 17 | 8 | 4195 |
| 17 | 8.5 | 4481 |
| 17 | 9 | 4866 |
| 17 | 10 | 6559 |
| 17 | 11 | 7488 |
| 18 | 9 | 4530 |
| 18 | 10 | 4885 |
| 18 | 11 | 7283 |

According to the experiment results illustrated in FIG. 5, points 51, 52, 53 and 54 are included in a region 510 where the maximum output of the induction heating device according to the present invention is 6500 W to 7500 W within an operating range where the frequency of the high-frequency AC applied to the first coil and the second coil is 25 kHz to 35 kHz.

In the final analysis, referring to the experimental results illustrated in FIG. 5 and [Table 1], the induction heating device according to the present invention may have a maximum output of 6500 W to 7500 W when the ratio between the first number of rotations and the second number of rotations is any one of 18:11, 17:11, 17:10 and 16:10.

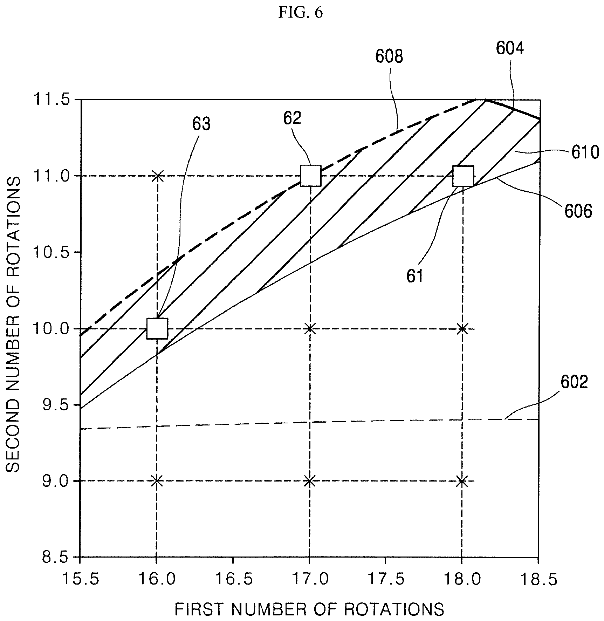

FIG. 6 is a graph illustrating a ratio between a first number of rotations and a second number of rotations that meets a restriction condition according to another embodiment of the present invention.

In FIG. 6, a horizontal axis represents a first number of rotations, i.e., the number of times the first coil is wound, and a vertical axis represents a second number of rotations, i.e., the number of times the second coil is wound. Further, in FIG. 6, a line 602 represents a region where the frequency of the high-frequency AC applied to the first coil and the second coil is maintained at 25 kHz, and a line 604 represents a region where the frequency of the high-frequency AC applied to the first coil and the second coil is maintained at 35 kHz. Further, in FIG. 6, a line 606 represents a region where the maximum output of the induction heating device according to the present invention is 6500 W, and a line 608 represents a region where the maximum output of the induction heating device according to the present invention is 7500 W.

According to the experiment results illustrated in FIG. 6, points 61, 62 and 63 are included in a region 610 where the maximum output of the induction heating device according to the present invention is 7000 W to 7500 W within an operating range where the frequency of the high-frequency AC applied to the first coil and the second coil is 25 kHz to 35 kHz. According to these results, when the ratio between the first number of rotations and the second number of rotations is any one of 18:11, 17:11 and 16:10, the induction heating device according to the present invention may a maximum output of 6500 W to 7500 W.

In the final analysis, referring to the experimental results illustrated in FIGS. 5 and 6, when the ratio between the number of rotations of the first coil and the number of rotations of the second coil, i.e., the ratio between the first number of rotations and the second number of rotations is any one of 18:11, 17:11, 17:10 and 16:10, the induction heating device according to the present invention may a maximum output of 6500 W to 7500 W. In particular, when the ratio between the first number of rotations and the second number of rotations is any one of 18:11, 17:11 and 16:10, the induction heating device according to the present invention may a maximum output of 7000 W to 7500 W. The maximum output of the induction heating device according to the present invention may greatly exceed a maximum output range of 3000 W to 5500 W of a conventional induction heating device. As a result, the induction heating device having a larger output according to the present invention may heat the object to be heated more quickly than the conventional induction heating device.

Since various substitutions, changes, and modifications can be made within the scope that does not deviate the technical idea of the present invention for those skilled in the art to which the present invention pertains, the present invention is not limited by the above-mentioned embodiments and the accompanying drawings.

## Claims

1. An induction heating device for heating an object to be heated, comprising:
a first coil wound in a radial direction by a first number of rotations;
a second coil spaced apart from the first coil by a predetermined distance to be disposed outside the first coil, the second coil wound in a radial direction by a second number of rotations; and
a power supply unit configured to convert external alternating current (AC) power to supply a high-frequency AC to the first coil and the second coil,
wherein a ratio between the first number of rotations and the second number of rotations is determined such that induction heating device has a maximum output of 6500W to 7500W.

2. The induction heating device of claim 1, wherein
the ratio between the first number of rotations and the second number of rotations is any one of 18:11, 17:11, 17:10 and 16:10.

3. The induction heating device of claim 1, wherein
the induction heating device has a maximum output of 7000 W to 7500 W.

4. The induction heating device of claim 3, wherein
the ratio between the first number of rotations and the second number of rotations is any one of 18:11, 17:11 and 16:10.

5. The induction heating device of claim 1, wherein
an output frequency of the high-frequency AC is 25 kHz to 35 kHz.

6. The induction heating device of claim 1, further comprising:
one or more first shielding sheets disposed on a lower portion of the first coil; and
one or more second shielding sheets disposed on a lower portion of the second coil.

7. The induction heating device of claim 1, wherein
a maximum output of the induction heating device is the highest when the ratio between the first number of rotations and the second number of rotations is 17:11.

8. An induction heating device for heating an object to be heated, comprising:
an induction assembly including a first coil wound in a radial direction by a first number of rotations and a second coil spaced apart from the first coil by a predetermined distance to be disposed outside the first coil, the second coil wound in a radial direction by a second number of rotations;
an interface unit configured to adjusting an output of the induction assembly; and
a power supply unit configured to supply power to the induction assembly and the interface unit,
wherein a ratio between the first number of rotations and the second number of rotations is determined such that induction heating device has a maximum output of 6500W to 7500W.

9. The induction heating device of claim 8, wherein
the ratio between the first number of rotations and the second number of rotations is any one of 18:11, 17:11, 17:10 and 16:10.

10. The induction heating device of claim 8, wherein
the induction heating device has a maximum output of 7000 W to 7500 W.

11. The induction heating device of claim 8, wherein
the ratio between the first number of rotations and the second number of rotations is any one of 18:11, 17:11 and 16:10.

12. The induction heating device of claim 8, wherein
the power supply unit supplies a high-frequency AC to the first coil and the second coil, and
an output frequency of the high-frequency AC is 25 kHz to 35 kHz.

13. The induction heating device of claim 1, further comprising:
one or more first shielding sheets disposed on a lower portion of the first coil; and
one or more second shielding sheets disposed on a lower portion of the second coil.

14. The induction heating device of claim 8, wherein
a maximum output of the induction heating device is the highest when the ratio between the first number of rotations and the second number of rotations is 17:11.

15. The induction heating device of claim 8, wherein
when a user adjusts an output of the induction heating device to the maximum output through the interface unit, power is supplied to both the first coil and the second coil.
